# EUROPÄISCHE PATENTSCHRIFT

(11) **EP 2 607 105 B1**
(45) Veröffentlichungstag und Bekanntmachung des Hinweises auf die Patenterteilung: **22.02.2017**
(21) Anmeldenummer: 12196403.5
(22) Anmeldetag: 11.12.2012
(51) Int. Cl.: B60C 11/03, B60C 11/12, B60C 19/00

(54) **ANORDNUNG VON FAHRZEUGLUFTREIFEN AN EINEM FAHRZEUG**
ASSEMBLY OF VEHICLE PNEUMATIC TYRES ON A VEHICLE
AGENCEMENT DE PNEUS DE VÉHICULE SUR UN VÉHICULE

(30) Priorität: 21.12.2011 DE 102011056762
(43) Veröffentlichungstag der Anmeldung: 26.06.2013
(73) Patentinhaber: Continental Reifen Deutschland GmbH, 30165 Hannover (DE)
(72) Erfinder: Wies, Burkhard, 30559 Hannover (DE); Wiese, Klaus, 30559 Hannover (DE); Vennebörger, Martin, 30625 Hannover (DE)
(74) Vertreter: Finger, Karsten

(56) Entgegenhaltungen:
- DE-A1- 2 908 219
- DE-A1- 3 028 112
- US-A1- 2003 029 535

## Beschreibung

Die Erfindung betrifft eine Anordnung von Fahrzeugluftreifen an einem Fahrzeuginsbesondere an einem PKW- mit in Längsrichtung des Fahrzeuges in zwei hintereinander angeordneten Positionen angeordneten Fahrzeugrädern, auf welchen jeweils ein Fahrzeugluftreifen mit einem profilierten Laufstreifen angeordnet ist, wobei der profilierte Laufstreifen jeweils mit über den Umfang des Fahrzeugluftreifens erstreckten radial erhabenen Profilbändern ausgebildet ist, wobei in wenigstens einem der Profilbänder eines jeden Fahrzeugluftreifens innerhalb der Bodenaufstandsbreite T_{A} des Fahrzeugluftreifens in Umfangsrichtung U des Fahrzeugluftreifens hintereinander angeordnet verteilte Feineinschnitte ausgebildet sind, die sich mit ihrer Haupterstreckung in der das Profilband nach radial außen begrenzenden Oberfläche mit ihrer größten Richtungskomponente in axialer Richtung A des Fahrzeugluftreifens erstrecken und die sich ausgehend von der radial äußeren Oberfläche in radialer Richtung R bis zu dem den Feineinschnitt nach radial innen begrenzenden Feineinschnittsgrund erstrecken.

Üblicher Weise werden Fahrzeuge für die Vorder- und Hinterachse mit Fahrzeugluftreifen mit gleichem Laufstreifenprofil bestückt. Zur Erzielung besonders guter Wintereigenschaften für verbesserten Griff auf Schnee und Matsch sowie zur Erzielung von verbesserten Nassgriffeigenschaften bei Sommerreifen werden die Laufstreifenprofile häufig mit über den Umfang des Fahrzeugluftreifens verteilten Feineinschnitten ausgebildet, die sich mit ihrer Haupterstreckungsrichtung im Wesentlichen in axialer Richtung A des Fahrzeugluftreifens erstrecken und die sich ausgehend von der radial nach außen des Laufstreifenprofil begrenzenden Oberfläche in radialer Richtung R nach innen bis zum Feineinschnittgrund erstrecken. Die Feineinschnitte erstrecken sich dabei üblicher Weise genau in radialer Richtung R nach innen. Die Feineinschnitte ermöglichen ein Öffnen und Schließen beim Durchlaufen des Reifenlatsches. Hierdurch kann beim Fahren von schneebedeckten oder matschbedeckten Oberflächen Schnee eingeschlossen und der Griff verbessert werden. Bei Befahren von nassen Oberflächen sowie auf Schnee bilden sich zusätzliche Griffkanten, die ebenfalls den Griff verbessern können. Gleichzeitig wird auf trockener Oberfläche aufgrund der durch die Feineinschnitte reduzierten Umfangssteifigkeit der Profilelemente die Traktion negativ beeinflusst.

Gelegentlich wurde vorgeschlagen, die Feineinschnitte derartiger Reifen längs ihrer radialen Erstreckung in einer Neigung unter Einschluss eines Neigungswinkels zur radialen Richtung R auszubilden, wodurch das Öffnungs- und Schließverhalten des Feineinschnitts beeinflusst werden kann. Ein verbessertes Öffnen zur besseren Aufnahme von Schnee kann somit zwar den Griff des Reifens auf Schnee und ggfs. den Griff auf nasser Oberfläche verbessern, führt jedoch zur weiteren Reduktion der Umfangssteifigkeit und beeinflusst somit negativ die erforderliche Traktions- bzw. Bremswirkung. Ein verbessertes Schließverhalten durch die gewählte Neigung verbessert zwar die Umfangssteifigkeit in einer Drehrichtung des Reifens und somit entweder das Traktions- oder Bremsverhalten dieses Reifens auf trockener Fahrbahn bei gleichzeitiger Reduktion der Umfangssteifigkeit in die andere Drehrichtung und somit bei Verschlechterung des Brems- bzw. Traktionsverhaltens auf trockener Fahrbahn unter zusätzlicher Inkaufnahme einer reduzierten Griffwirkung auf Schnee bzw. auf nasser Oberfläche des Reifens.

Aus der DE 2908219 ist es bekannt, einen Fahrzeugreifen zu der auf den Laufstreifen gebildeten Normalen geneigt auszubilden, wobei die Einschnitte zur Verbesserung der Traktion in Drehrichtung geneigt sind. Darüber hinaus ist es aus dem Dokument bekannt, die Einschnitte zur Optimierung der Bremswirkung entgegensetzt zur Drehrichtung geneigt auszubilden.

Der Erfindung liegt daher die Aufgabe zugrunde, mit einfachen Mitteln eine Verbesserung des Traktions- und Bremsverhaltens eines Fahrzeuges zu ermöglichen.

Die Aufgabe wird erfindungsgemäß durch die Anordnung von Fahrzeugluftreifen an einem Fahrzeug- insbesondere an einem PKW- mit in Längsrichtung des Fahrzeuges in zwei hintereinander angeordneten Positionen angeordneten Fahrzeugrädern, auf welchen jeweils ein Fahrzeugluftreifen mit einem profilierten Laufstreifen angeordnet ist, wobei der profilierte Laufstreifen jeweils mit über den Umfang des Fahrzeugluftreifens erstreckten radial erhabenen Profilbändern ausgebildet ist, wobei in wenigstens einem der Profilbänder eines jeden Fahrzeugluftreifens innerhalb der Bodenaufstandsbreite T_{A} des Fahrzeugluftreifens in Umfangsrichtung U des Fahrzeugluftreifens hintereinander angeordnet verteilte Feineinschnitte ausgebildet sind, die sich mit ihrer Haupterstreckung in der das Profilband nach radial außen begrenzenden Oberfläche mit ihrer größten Richtungskomponente in axialer Richtung A des Fahrzeugluftreifens erstrecken und die sich ausgehend von der radial äußeren Oberfläche in radialer Richtung R bis zu dem den Feineinschnitt nach radial innen begrenzenden Feineinschnittsgrund erstrecken, gemäß den Merkmalen von Anspruch 1 gelöst, bei der die Feineinschnitte in dem Profilband des bzw. der in Fahrtrichtung des Fahrzeuges bei Vorwährtsfahrt in vorderer Position angeordneten Fahrzeugluftreifen(s) über ihre Erstreckung bis zum Feineinschnittsgrund hinweg zur radialen Richtung R anders geneigt sind als die Feineinschnitte in dem Profilband des bzw. der in hinterer Position angeordneten Fahrzeugluftreifen(s) und bei der die Feineinschnitte in dem Profilband des bzw. der in Fahrtrichtung des Fahrzeuges bei Vorwährtsfahrt in vorderer Position angeordneten Fahrzeugluftreifen(s) über ihre Erstreckung bis zum Feineinschnittsgrund hinweg in den Schnittebenen senkrecht zur Reifenachse unter Einschluss eines Neigungswinkel α zur radialen Richtung R geneigt und die Feineinschnitte in dem Profilband des bzw. der in hinterer Position angeordneten Fahrzeugluftreifen(s) über ihre Erstreckung bis zum Feineinschnittsgrund hinweg in den Schnittebenen senkrecht zur Reifenachse unter Einschluss eines Neigungswinkels β zur radialen Richtung R geneigt sind, wobei die Größe der Neigungswinkel unterschiedlich ausgebildet ist.

Durch diese Anordnung wird ermöglicht, dass ein Fahrzeug, welches an den in Fahrtrichtung hintereinander in unterschiedlicher vorderer und hinterer Position bestückten Fahrzeugrädern den dort unterschiedlichen Umfangsgrifferfordemissen unterliegt, bei den in vorderer und hinterer Position montierten Fahrzeugreifen mit individuell den jeweiligen Erfordernissen entsprechend abgestimmtem Öffnungsverhalten der Feineinschnitte ausgebildet werden kann, so dass für das Fahrzeug selbst eine Feineinstimmung des Öffnungsverhaltens der Feineinschnitte an den vorderen bzw. hinteren Fahrzeugreifen ermöglicht wird. Hierdurch ist eine optimierte Feineinstimmung des Griffs auf Schnee bzw. Nässe und der Übertragung der Traktions- und Bremskräfte auf trockener Straße individuell für das Fahrzeug möglich.

Besonders vorteilhaft ist die Anordnung gemäß den Merkmalen von Anspruch 2, wobei β>α ausgebildet ist.

Besonders vorteilhaft ist die Anordnung gemäß den Merkmalen von Anspruch 3, wobei der Neigungswinkel β mit β ≠0°ausgebildet ist. Hierdurch kann durch Aufbringen eines Momentes zur Übertragung von Umfangskräften eine Aufstellung der durch die Feineinschnitte geteilten Profilelemente bewirkt werden. Hierdurch kann gezielt ein größerer Aufkantwinkel der zwischen radial äußerer Oberfläche und Feineinschnitt gebildeten Profilelementkanten und beispielsweise für den Einsatz auf Schnee ein besserer Schnee-Fräß-Effekt (snow-milling-effect) erreicht werden. Darüber hinaus kann hierdurch mehr Schnee in die Profileinschnitte eingelagert werden, was den Untergrund von losen Partikeln reinigt und gleichzeitig die Fläche für den Schnee-Schnee-Reibungsanteil vergrößert. Die Profilelementkanten sind durch den Winkel darüber hinaus geschärft und können den Griff z.B. für Traktion auf Schnee verbessern.

Besonders vorteilhaft ist die Anordnung gemäß den Merkmalen von Anspruch 4, wobei der Neigungswinkel α mit 0°≤α≤15° - insbesondere mit α=0° - ausgebildet ist.

Besonders vorteilhaft ist die Anordnung gemäß den Merkmalen von Anspruch 5, bei der die Feineinschnitte in dem Profilband des bzw. der in Fahrtrichtung des Fahrzeuges bei Vorwärtsfahrt in vorderer Position angeordneten Fahrzeugluftreifen(s) über ihre Erstreckung bis zum Feineinschnittsgrund hinweg in den Schnittebenen senkrecht zur Reifenachse unter Einschluss eines Neigungswinkel α zur radialen Richtung R geneigt und die Feineinschnitte in dem Profilband des bzw. der in hinterer Position angeordneten Fahrzeugluftreifen(s) über ihre Erstreckung bis zum Feineinschnittsgrund hinweg in den Schnittebenen senkrecht zur Reifenachse unter Einschluss eines Neigungswinkels β zur radialen Richtung R geneigt sind, wobei die Neigungsrichtung des einen Neigungswinkels in Drehrichtung D des Fahrzeugreifens bei Vorwärtsfahrt und die Neigungsrichtung des anderen Neigungswinkels entgegen der Drehrichtung D des Fahrzeugreifens bei Vorwärtsfahrt ausgebildet ist. Hierdurch kann eine belastungsabhängige Optimierung der Kraftübertragung der verschiedenen Achsen individuell in Abhängigkeit von den besonderen Erfordernissen des Fahrzeuges unter Berücksichtigung seines Antriebskonzepts und seines gewünschten Einsatzes eingestellt werden.

Besonders vorteilhaft ist die Anordnung gemäß den Merkmalen von Anspruch 6, bei der die Neigungsrichtung des Neigungswinkels β des bzw. der in hinterer Position - insbesondere an einem antreibbaren Fahrzeugrad - angeordneten Fahrzeugluftreifen(s) in Drehrichtung D des Fahrzeugreifens bei Vorwärtsfahrt und die Neigungsrichtung des Neigungswinkels α des bzw. der in vorderer Position - insbesondere an einem nicht antreibbaren Fahrzeugrad - angeordneten Fahrzeugluftreifen(s) entgegen der Drehrichtung D des Fahrzeugreifens bei Vorwärtsfahrt ausgebildet ist. Die Ausbildung ermöglicht eine optimierte Einstellung der Traktionseigenschaften bei Vorwärtsfahrt an den in hinterer Position montierten Fahrzeugreifen und eine optimierte Einstellung der Bremseigenschaften an den in vorderer Position montierten Fahrzeugreifen. Die Ausbildung ermöglicht somit eine optimale Konfiguration für hinterradgetriebene Kraftfahrzeuge, an denen die Traktion vollständig über die Hinterachse erfolgt und die somit durch diese Ausbildung genau an dieser für diese Kraftübertragung wichtige Hinterachse besonders optimiert werden können, und an denen das Bremsen zu einem großen Teil über die Vorderachse erfolgt und die durch diese Ausbildung genau an dieser Vorderachse hierzu noch optimiert werden können.

Besonders vorteilhaft ist die Anordnung gemäß den Merkmalen von Anspruch 7, wobei die Neigungsrichtung des Neigungswinkels α des bzw. der in vorderer Position - insbesondere an einem antreibbaren Fahrzeugrad - angeordneten Fahrzeugluftreifen(s) in Drehrichtung D des Fahrzeugreifens bei Vorwärtsfahrt und die Neigungsrichtung des Neigungswinkels β des bzw. der in hinterer Position - insbesondere an einem nicht antreibbaren Fahrzeugrad - angeordneten Fahrzeugluftreifen(s) entgegen der Drehrichtung D des Fahrzeugreifens bei Vorwärtsfahrt ausgebildet ist. Die Ausbildung ermöglicht eine optimierte Einstellung der Traktionseigenschaften bei Vorwärtsfahrt an den in vorderer Position montierten Fahrzeugreifen und eine optimierte Einstellung der Bremseigenschaften an den in hinterer Position montierten Fahrzeugreifen. Die Ausbildung ermöglicht somit eine optimale Konfiguration für vorderradgetriebene Kraftfahrzeuge, an denen die Traktion vollständig über die Vorderachse erfolgt und die somit durch diese Ausbildung genau an dieser Vorderachse besonders optimiert werden kann. An diesen Fahrzeugen wird ein Teil der Bremskraft über die Hinterachse übertragen. Die Ausbildung ermöglicht eine zusätzliche Verbesserung der Bremskraft über die verbesserte Einleitung über die Hinterachse.

Besonders vorteilhaft ist die Ausbildung eines vierrädrigen motorgetriebenen Fahrzeugsinsbesondere eines PKW- mit in Längsrichtung des Fahrzeuges in zwei hintereinander angeordneten Positionen angeordneten Fahrzeugrädern, auf welchen jeweils ein Fahrzeugluftreifen mit einem profilierten Laufstreifen angeordnet ist, mit einer Anordnung von derartigen Fahrzeugluftreifen gemäß den Merkmalen von Anspruch 8.

Die Erfindung wird im Folgenden an Hand der in den Figuren 1 bis 12 dargestellten Ausführungsbeispiele näher erläutert. Hierin zeigen
- Fig. 1: Seitenansicht eines Pkw mit auf Vorderachse VA und auf Hinterachse HA montierten Fahrzeugrädern,
- Fig.2: Schematische Draufsicht auf die Räderanordnung von Fig. 2 gemäß Schnitt II-II von Fig. 1,
- Fig. 3: Profilausschnitt eines Profilbandes eines auf der Hinterachse HA montierten Fahrzeugluftreifens von Fig.2 in Draufsicht,
- Fig. 4: Profilelement von Fig.3 in Schnittdarstellung gemäß Schnitt IV-IV von Fig.3,
- Fig. 5: Abschnitt eines Profilbandes eines auf der Vorderachse VA montierten Fahrzeugluftreifens von Fig.2 in Draufsicht,
- Fig. 6: Profilelement von Fig.5 in Schnittdarstellung gemäß Schnitt VI-VI von Fig.5,
- Fig. 7: Profilbandabschnitt eines auf der Vorderachse VA montierten Fahrzeugluftreifens in alternativer Ausführung zu Fig.5,
- Fig. 8: Profilelement von Fig. 7 in Schnittdarstellung gemäß Schnitt VIII-VIII von Fig.7,
- Fig. 9: Schematische Darstellung der hintereinander angeordneten Fahrzeugluftreifen zur Erläuterung der unterschiedlichen Neigungswinkel der auf Vorder- und Hinterrad angeordneten Feineinschnitte am Beispiel eines für speziellen Winterbetrieb bestückten Fahrzeuges,
- Fig.10: Darstellung zur Erläuterung der Wirkungsweise der Feineinschnitte von Fig.9 anhand der schematische Darstellungen in Fig.10a und 10b,
- Fig.11: zu Fig.9 analoge Darstellung einer Bestückung des Fahrzeuges mit einer Anordnung von Fahrzeugluftreifen für speziellen Sommerbetrieb und
- Fig. 12: Darstellung der Wirkungsweise der in der Fig.11 dargestellten Ausbildung anhand der schematischen Darstellung in Fig.12a und 12b.

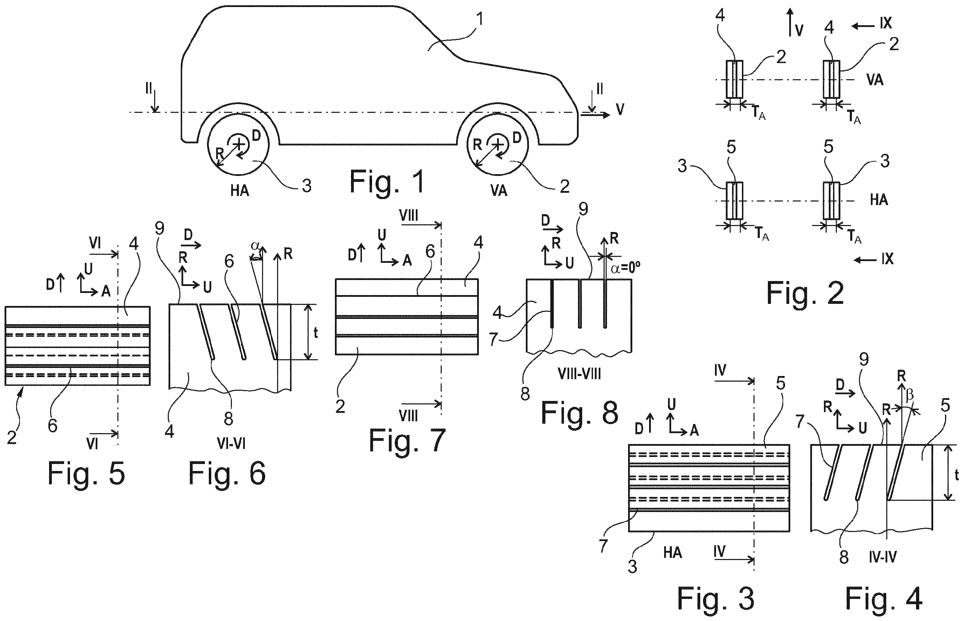

Die Figuren 1 und 2 zeigen einen Personenkraftwagen (Pkw) 1 mit einem Paar von auf einer in Fahrtrichtung bei Vorwärtsfahrt vorgeordneten Vorderachse V_{A} ausgebildeten Fahrzeugrädern, auf welchen jeweils ein Fahrzeugluftreifen 2 montiert ist, und mit einem Paar von auf einer in Fahrtrichtung bei Vorwärtsfahrt V nachgeordneten Hinterachse H_{A} ausgebildeten Fahrzeugrädern, auf welchen jeweils ein Fahrzeugluftreifen 3 montiert ist.

Wie in Fig.2 zu erkennen ist sind im Laufstreifenprofil eines jeden Fahrzeugluftreifens 2 innerhalb der Bodenaufstandsbreite T_{A} durch nicht dargestellte Umfangsrillen bekannter Art axial voneinander beabstandete Profilbänder 4 ausgebildet. Ebenso sind im Laufstreifenprofil eines jeden Fahrzeugluftreifens 3 innerhalb der Bodenaufstandsbreite T_{A} durch nicht dargestellte Umfangsrillen bekannter Art axial voneinander beabstandete Profilbänder 5 ausgebildet.

Die Profilbänder 4 bzw. 5 der Fahrzeugluftreifen 2 bzw. 3 sind dabei in einer ersten dargestellten Ausführung Umfangsrippen bekannter Art, welche sich über den gesamten Umfang des Fahrzeugluftreifens in Umfangsrichtung U des Fahrzeugluftreifens erstrecken. Die Profilbänder 4 bzw. 5 der Fahrzeugluftreifen 2 bzw. 3 sind in einer zweiten, nicht dargestellten Ausführungsart Profilblockreihen bekannter Art, die sich über den gesamten Umfang des Fahrzeugluftreifens in Umfangsrichtung U des Fahrzeugluftreifens erstrecken und aus in Umfangsrichtung U hintereinander angeordneten und jeweils durch Querrillen voneinander getrennten Profilblockelementen bekannter Art ausgebildet sind.

Die Profilbänder 4 bzw.5 sind in radialer Richtung R des jeweiligen Fahrzeugluftreifens 2 bzw. 3 nach außen hin durch eine radial äußere, die Straßenkontaktoberfläche bildende Oberfläche 9 begrenzt.

Über den Umfang des Fahrzeugluftreifens verteilt sind in den Profilbändern 4 eine Vielzahl von Feineinschnitten 6 bekannter Art ausgebildet, welche sich in der radial äußeren Oberfläche 9 in axialer Richtung A des Fahrzeugluftreifen und somit quer zur Umfangsrichtung U des Fahrzeugluftreifens und in radialer Richtung R, ausgehend von der radial äußeren Oberfläche 9 nach innen sich bis zu dem den Feineinschnitt 6 nach radial innen hin begrenzenden Feineinschnittsgrund 8 erstrecken. Die Feineinschnitte 6 erstrecken sich in axialer Richtung A des Fahrzeugluftreifens über die gesamte Breite des Profilbandes 4 innerhalb der Bodenaufstandsbreite T_{A}.

Über den Umfang des Fahrzeugluftreifens verteilt sind in den Profilbändern 5 eine Vielzahl von Feineinschnitten 7 bekannter Art ausgebildet, welche sich in der radial äußeren Oberfläche 9 in axialer Richtung A des Fahrzeugluftreifen und somit quer zur Umfangsrichtung U des Fahrzeugluftreifens und in radialer Richtung R, ausgehend von der radial äußeren Oberfläche 9 nach innen sich bis zu dem den Feineinschnitt 7 nach radial innen hin begrenzenden Feineinschnittsgrund 8 erstrecken. Die Feineinschnitte 7 erstrecken sich in axialer Richtung A des Fahrzeugluftreifens über die gesamte Breite des Profilbandes 5 innerhalb der Bodenaufstandsbreite T_{A}.

Die Feineinschnitte 6 eines Profilbandes 4 sind über den Umfang des Fahrzeugluftreifens hinweg parallel zueinander angeordnet und erstrecken sich - wie in den Figuren 5 und 6 dargestellt - in den zur Reifenachse jeweils senkrecht ausgebildeten Querschnittsebenen geradlinig unter Einschluss eines Neigungswinkels α zur radialen Richtung R, gemessen in der radial äußeren Oberfläche 9. Die Feineinschnitte 7 des Profilbandes 5 sind über den Umfang des Fahrzeugluftreifens hinweg parallel zueinander angeordnet und erstrecken sich - wie in den Figuren 3 und 4 dargestellt - in den zur Reifenachse jeweils senkrecht ausgebildeten Querschnittsebenen geradlinig unter Einschluss eines Neigungswinkels β zur radialen Richtung R, gemessen in der radial äußeren Oberfläche 9.

Der Neigungswinkel β der Feineinschnitte 7 zur radialen Richtung R und der Neigungswinkel α der Feineinschnitte 6 zur radialen Richtung R sind mit β > α ausgebildet.

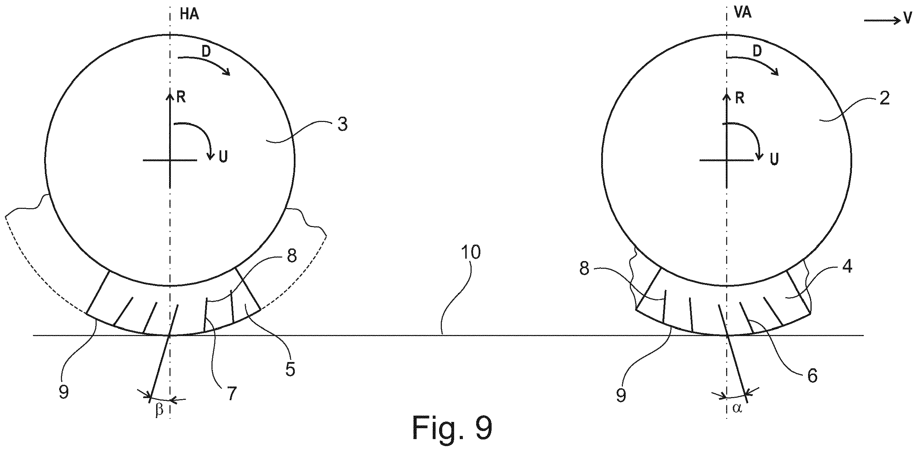

Fig. 9 zeigt in schematischer Weise die Anordnung derartiger in Fahrtrichtung bei Vorwärtsfahrt V hintereinander ausgebildeter Fahrzeugluftreifen 2 und 3 eines hinterradgetriebenen Pkw für den Wintereinsatz, d.h. zum Einsatz auch auf schnee- oder matschbedeckten Straßen. In Fig. 9 ist deutlich zu erkennen, dass die Feineinschnitte 6 der auf der Vorderachse V_{A} montierten Fahrzeugluftreifen 2 ausgehend von Rillengrund 8 bis zur radial äußeren Oberfläche 9 von radial innen nach radial außen hin gesehen entgegen der Drehrichtung D des Fahrzeugluftreifens bei Vorwärtsfahrt V unter Einschluss des Neigungswinkels α zur radialen Richtung R geneigt ausgebildet sind. Ebenso ist in Fig. 9 deutlich zu erkennen, dass die Feineinschnitte 7 der auf der Hinterachse H_{A} montierten Fahrzeugluftreifen 3 ausgehend von Rillengrund 8 bis zur radial äußeren Oberfläche 9 von radial innen nach radial außen hin gesehen in Drehrichtung D des Fahrzeugluftreifens bei Vorwärtsfahrt V unter Einschluss des Neigungswinkels β zur radialen Richtung R geneigt ausgebildet sind.

Der Neigungswinkel α ist dabei mit 0° ≤ α ≤ 2° ausgebildet. Der Neigungswinkel β ist mit β > α ausgebildet. Beispielsweise ist α =1° und β =5°ausgebildet.

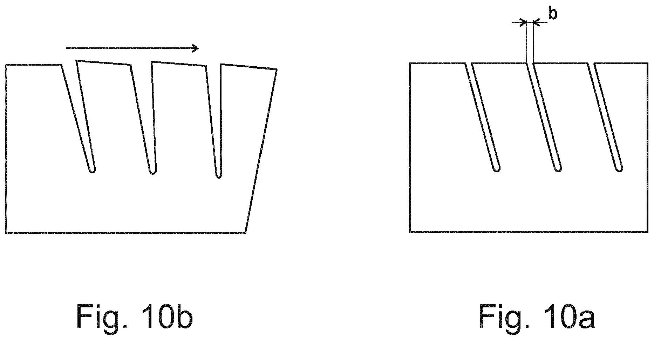

Die Figuren 10a und 10b zeigen die Veränderung der Feineinschnitte 7 bzw. 6 bei Auftreten unterschiedlicher Umfangsbelastung. Fig. 10a zeigt dabei den Normalbetrieb ohne Traktion und Bremsen, bei dem der jeweilige Feineinschnitt geradlinig vom Rillengrund 8 bis zur radial äußeren Oberfläche 9 hin erstreckt ausgebildet ist. Fig. 10b zeigt den Fall, bei welchem dynamische Umfangskräfte entgegen der Neigung der Feineinschnitte wirken, in diesem Fall öffnen die Feineinschnitte. Fig. 10b zeigt den Belastungszustand der Feineinschnitte 6 der am Vorderrad montierten Fahrzeugreifen 2 bei Bremsmanövern. Die Feineinschnitte 6 öffnen sich und bilden so harte Griffkanten zum verstärkten Bremsen auf Schnee, Matsch und regennasser Straße. Fig. 10b zeigt auch den Belastungszustand der auf der Hinterachse ausgebildeten Fahrzeugluftreifen 3 bei Traktion. Bei Traktion öffnet der Feineinschnitt 7 und bildet scharfe Griffkanten zur Beschleunigung des Fahrzeugluftreifens und des Fahrzeugs auf Schnee, Matsch, Eis und regennasser Straße aus.

Fig. 7 und 8 zeigen eine Ausbildung, bei dem der Winkel α = 0° gewählt ist.

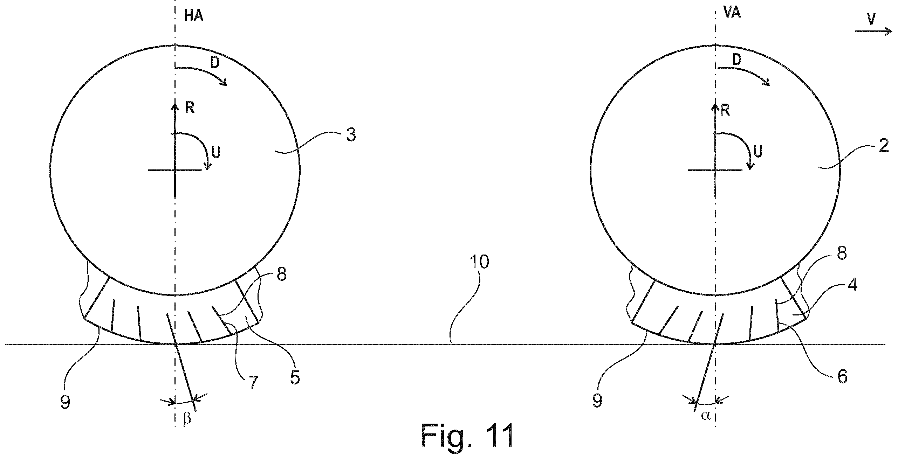

Fig.11 zeigt eine Anordnung von auf der Vorderachse des Pkws montierten Fahrzeugluftreifen 2 und auf der Hinterachse montierten Fahrzeugluftreifen 3 eines hinterradgetriebenen Fahrzeugs, welches speziell für den Sommereinsatz ausgerüstet ist, oder eines vorderachsgetriebenen Fahrzeuges, welches speziell für den Wintereinsatz mit Winterreifen ausgerüstet ist. In Fig.11 ist deutlich zu erkennen, dass die Feineinschnitte 6 der auf der Vorderachse V_{A} montierten Fahrzeugluftreifen 2 ausgehend von Rillengrund 8 bis zur radial äußeren Oberfläche 9 von radial innen nach radial außen hin gesehen in Drehrichtung D des Fahrzeugluftreifens bei Vorwärtsfahrt V unter Einschluss des Neigungswinkels α zur radialen Richtung R geneigt ausgebildet sind. Ebenso ist in Fig.11 deutlich zu erkennen, dass die Feineinschnitte 7 der auf der Hinterachse H_{A} montierten Fahrzeugluftreifen 3 ausgehend von Rillengrund 8 bis zur radial äußeren Oberfläche 9 von radial innen nach radial außen hin gesehen entgegen der Drehrichtung D des Fahrzeugluftreifens bei Vorwärtsfahrt V unter Einschluss des Neigungswinkels β zur radialen Richtung R geneigt ausgebildet sind.

Der Neigungswinkel α ist dabei mit 0° ≤ α ≤ 15° ausgebildet. Der Neigungswinkel β ist mit β > α ausgebildet.

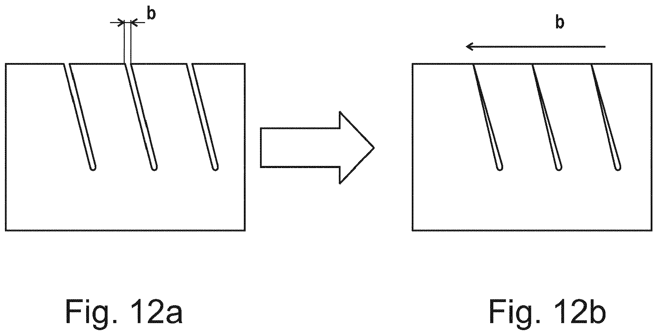

Die Figuren 12a und 12b zeigen bei dem hinterradgetriebenen Fahrzeug, welches speziell für den Sommereinsatz ausgerüstet ist, die Veränderung der Feineinschnitte 7 bzw. 6 bei Auftreten unterschiedlicher Umfangsbelastung und die Wirkung der für die jeweilige Achse wesentlichen dynamischen Umfangskräfte auf die Feineinschnitte 6 bzw. 7. Fig.12a zeigt die Feineinschnitte in dem durch dynamische Umfangskräfte weitgehend unbelasteten Zustand, bei welchem die Feineinschnitte 7 bzw.6 über ihre radiale Erstreckung hinweg mit gleichbleibender Öffnungsbreite ausgebildet sind. Fig.12b zeigt den Belastungszustand des Bremsens an dem für die Bremskraftübertragung wesentlichen auf der Vorderachse V_{A} montierten Fahrzeuglufteifen 2 und den Belastungszustand der Traktion an dem für die Traktion an einem hinterradgetriebenen Fahrzeug wesentlichen auf der Hinterachse H_{A} montierten Fahrzeugluftreifen 3. Wie Fig. 12b entnommen werden kann, ist die Neigungsrichtung der Feineinschnitte 6 bzw. 7 von radial innen nach radial außen hin mit einer Umfangskomponente versehen, welche der für die Fahrzeugachse wesentlichen dynamischen einwirkenden Kraftkomponente entspricht. Durch die gewählte Neigungsrichtung schließt der Feineinschnitt 6 des an der Vorderachse V_{A} montierten Fahrzeugreifens 2 beim Bremsen und der Feineinschnitt 7 des auf der Hinterachse H_{A} montierten Fahrzeugluftreifens 3 beim Beschleunigen bei Vorwärtsfahrt schneller und kann sich beim Schließen an dem steifen durch den Feineinschnitt 6 getrennten, dem Feineinschnitt 6 in Schließrichtung vorgeordneten Abschnitt des Profilbandes absützen. Hierdurch erfolgt schnell eine zuverlässige Versteifung des Profilbandes über den Feineinschnitt 6 bzw.7 hinweg in Umfangsrichtung U. Die jeweiligen für die jeweilige Achse besonders relevanten dynamischen Kräfte können besser übertragen werden, d.h. die Bremskräfte an dem auf der Vorderachse V_{A} montierten Fahrzeugluftreifen 2 und die Traktionskräfte an dem auf der Hinterachse H_{A} montierten Fahrzeugluftreifen 3.

Die Neigungswinkel β sind mit β ≤ 16° ausgebildet.

Die Feineinschnitte 6 und 7 sind in der radial äußeren Oberfläche mit einer Feineinschnittsbreite b mit 0,4 mm ≤ b ≤ 1,5 mm ausgebildet.

Die Feineinschnitte 6 bzw. 7 sind in radialer Richtung R mit einer ausgehend von der radial äußeren Oberfläche 9 bis zum jeweiligen Feineinschnittsgrund 8 in radialer Richtung R gemessenen Tiefe t mit (Pt - 4mm) ≤ t ≤ Pt ausgebildet, wobei Pt die maximale, in radialer Richtung R des Reifens gemessene Profiltiefe ist. Pt ist beispielseise mit Pt=9mm ausgebildet.

In einem Ausführungsbeispiel ist in den Fahrzeugluftreifen 2 zumindest das über den Breitenerstreckungsbereich des Reifens über die Äquatorebene Ä hinweg reichende Profilband der an der Vorderachse VA montierten Fahrzeugluftreifen 2 als Profilband 4 mit geneigten Feineinschnitten 6 und das in den Fahrzeugreifen 3 zumindest das über den Breitenerstreckungsbereich des Reifens über die Äquatorebene Ä hinweg reichende Profilband der an der Vorderachse H_{A} montierten Fahrzeugluftreifen 3 als Profilband 5 mit geneigten Feineinschnitten 7 ausgebildet. In einem anderen nicht dargestellten Ausführungsbeispiel sind alle innerhalb der Bodenaufstandsbreite T_{A} ausgebildeten Profilbänder des auf der Vorderachse V_{A} ausgebildeten Fahrzeugreifens 2 als Profilbänder 4 und alle Profilbänder des auf der Hinterachse montierten Fahrzeugluftreifens 3 als Profilbänder 5 jeweils mit den entsprechend geneigten Feineinschnitten 6 bzw. 7 versehen ausgebildet.

### Bezugszeichenliste

### (Teil der Beschreibung)

- 1: Personenkraftwagen (PKW)
- 2: Fahrzeugluftreifen für Vorderachse VA
- 3: Fahrzeugluftreifen für Hinterachse HA
- 4: Profilband
- 5: Profilband
- 6: Feineinschnitt
- 7: Feineinschnitt
- 8: Rillengrund
- 9: Radial äußere Oberfläche
- 10: Straßenoberfläche

## Patentansprüche

1. Anordnung von Fahrzeugluftreifen (2,3) an einem Fahrzeug- insbesondere an einem PKW- mit in Längsrichtung des Fahrzeuges in zwei hintereinander angeordneten Positionen angeordneten Fahrzeugrädern, auf welchen jeweils ein Fahrzeugluftreifen mit einem profilierten Laufstreifen angeordnet ist, wobei der profilierte Laufstreifen jeweils mit über den Umfang des Fahrzeugluftreifens erstreckten radial erhabenen Profilbändern ausgebildet ist, wobei in wenigstens einem der Profilbänder (4,5) eines jeden Fahrzeugluftreifens innerhalb der Bodenaufstandsbreite T_{A} des Fahrzeugluftreifens (2,3) in Umfangsrichtung U des Fahrzeugluftreifens hintereinander angeordnet verteilte Feineinschnitte (6,7) ausgebildet sind, die sich mit ihrer Haupterstreckung in der das Profilband (4,5) nach radial außen begrenzenden Oberfläche (9) mit ihrer größten Richtungskomponente in axialer Richtung A des Fahrzeugluftreifens erstrecken und die sich ausgehend von der radial äußeren Oberfläche (9) in radialer Richtung R bis zu dem den Feineinschnitt (6,7) nach radial innen begrenzenden Feineinschnittsgrund (8) erstrecken,
**dadurch gekennzeichnet,**
**dass** die Feineinschnitte (6) in dem Profilband (4) des bzw.der in Fahrtrichtung des Fahrzeuges (1) bei Vorwährtsfahrt in vorderer Position angeordneten Fahrzeugluftreifen(s) (2) über ihre Erstreckung bis zum Feineinschnittsgrund (8) hinweg zur radialen Richtung R anders geneigt sind als die Feineinschnitte (7) in dem Profilband (5) des bzw.der in hinterer Position angeordneten Fahrzeugluftreifen(s) (3), und
**dass** die Feineinschnitte (6) in dem Profilband (4) des bzw.der in Fahrtrichtung des Fahrzeuges bei Vorwährtsfahrt in vorderer Position angeordneten Fahrzeugluftreifen(s) (2) über ihre Erstreckung bis zum Feineinschnittsgrund (8) hinweg in den Schnittebenen senkrecht zur Reifenachse unter Einschluss eines Neigungswinkel α zur radialen Richtung R geneigt und die Feineinschnitte (7) in dem Profilband (5) des bzw. der in hinterer Position angeordneten Fahrzeugluftreifen(s) (3) über ihre Erstreckung bis zum Feineinschnittsgrund (8) hinweg in den Schnittebenen senkrecht zur Reifenachse unter Einschluss eines Neigungswinkels β zur radialen Richtung R geneigt sind, wobei die Größe der Neigungswinkel unterschiedlich ausgebildet ist.

2. Anordnung von Fahrzeugluftreifen an einem Fahrzeug gemäß den Merkmalen von Anspruch 1,
wobei die Größe der Neigungswinkel mit β>α ausgebildet ist.

3. Anordnung von Fahrzeugluftreifen an einem Fahrzeug gemäß den Merkmalen von Anspruch 2,
wobei der Neigungswinkel β mit β ≠0°ausgebildet ist.

4. Anordnung von Fahrzeugluftreifen an einem Fahrzeug gemäß den Merkmalen von Anspruch 2 oder 3,
wobei der Neigungswinkel α mit 0°≤α≤15° - insbesondere mit α=0° - ausgebildet ist.

5. Anordnung von Fahrzeugluftreifen an einem Fahrzeug gemäß den Merkmalen von einem oder mehreren der Ansprüche 1 bis 4,
wobei die Feineinschnitte (6) in dem Profilband (4) des bzw. der in Fahrtrichtung des Fahrzeuges (1) bei Vorwärtsfahrt in vorderer Position angeordneten Fahrzeugluftreifen(s) (2) über ihre Erstreckung bis zum Feineinschnittsgrund (8) hinweg in den Schnittebenen senkrecht zur Reifenachse unter Einschluss eines Neigungswinkel α zur radialen Richtung R geneigt und die Feineinschnitte (7) in dem Profilband (5) des bzw. der in hinterer Position angeordneten Fahrzeugluftreifen(s) (3) über ihre Erstreckung bis zum Feineinschnittsgrund (8) hinweg in den Schnittebenen senkrecht zur Reifenachse unter Einschluss eines Neigungswinkels β zur radialen Richtung R geneigt sind, wobei die Neigungsrichtung des einen Neigungswinkels in Drehrichtung D des Fahrzeugreifens bei Vorwärtsfahrt und die Neigungsrichtung des anderen Neigungswinkels entgegen der Drehrichtung D des Fahrzeugreifens bei Vorwärtsfahrt ausgebildet ist.

6. Anordnung von Fahrzeugluftreifen an einem Fahrzeug gemäß den Merkmalen von Anspruch 5,
wobei die Neigungsrichtung des Neigungswinkels β des bzw. der in hinterer Position - insbesondere an einem antreibbaren Fahrzeugrad - angeordneten Fahrzeugluftreifen(s) (3) in Drehrichtung D des Fahrzeugreifens bei Vorwärtsfahrt und die Neigungsrichtung des Neigungswinkels α des bzw. der in vorderer Position - insbesondere an einem nicht antreibbaren Fahrzeugrad - angeordneten Fahrzeugluftreifen(s) entgegen der Drehrichtung D des Fahrzeugreifens (2) bei Vorwärtsfahrt ausgebildet ist.

7. Anordnung von Fahrzeugluftreifen an einem Fahrzeug gemäß den Merkmalen von Anspruch 5,
wobei die Neigungsrichtung des Neigungswinkels α des bzw. der in vorderer Position - insbesondere an einem antreibbaren Fahrzeugrad - angeordneten Fahrzeugluftreifen(s) (2) in Drehrichtung D des Fahrzeugreifens bei Vorwärtsfahrt und die Neigungsrichtung des Neigungswinkels β des bzw. der in hinterer Position - insbesondere an einem nicht antreibbaren Fahrzeugrad - angeordneten Fahrzeugluftreifen(s) (3) entgegen der Drehrichtung D des Fahrzeugreifens bei Vorwärtsfahrt ausgebildet ist.

8. Vierrädriges motorgetriebenes Fahrzeug (1) - insbesondere PKW- mit in Längsrichtung des Fahrzeuges in zwei hintereinander angeordneten Positionen angeordneten Fahrzeugrädern, auf welchen jeweils ein Fahrzeugluftreifen (2,3) mit einem profilierten Laufstreifen angeordnet ist, mit einer Anordnung von Fahrzeugluftreifen gemäß den Merkmalen von einem der vorangegangenen Anprüche 1 bis 7.

## Claims

1. Arrangement of pneumatic vehicle tyres (2, 3) on a vehicle, in particular on a passenger motor vehicle, having vehicle wheels arranged in a longitudinal direction of the vehicle in two positions arranged one behind the other, on which vehicle wheels there is arranged in each case one pneumatic vehicle tyre with a profiled tread, wherein the profiled tread is formed in each case with radially elevated profile bands extending over the circumference of the pneumatic vehicle tyre, wherein, in at least one of the profile bands (4, 5) of each pneumatic vehicle tyre, within the ground contact patch width T_{A} of the pneumatic vehicle tyre (2, 3), there are formed sipes (6, 7) arranged one behind the other in a circumferential direction U of the pneumatic vehicle tyre, which sipes extend, with their main direction of extent in the surface (9) which delimits the profile band (4, 5) radially to the outside, with their greatest direction component in an axial direction A of the pneumatic vehicle tyre, and which sipes extend from the radially outer surface (9) in the radial direction R to the sipe base (8) which delimits the sipe (6, 7) in a radially inward direction,
**characterized**
**in that** the sipes (6) in the profile band (4) of the pneumatic vehicle tyre(s) (2) arranged in a front position in the direction of the travel of the vehicle (1) during forward travel are, over their extent to the sipe base (8), inclined differently with respect to the radial direction R than the sipes (7) in the profile band (5) of the pneumatic vehicle tyre(s) (3) arranged in a rear position, and
**in that** the sipes (6) in the profile band (4) of the pneumatic vehicle tyre(s) (2) arranged in the front position in the direction of travel of the vehicle during forward travel are, over their extent to the sipe base (8), inclined so as to enclose an angle of inclination α with respect to the radial direction R in the section planes perpendicular to the tyre axis, and the sipes (7) in the profile band (5) of the pneumatic vehicle tyre(s) (3) arranged in the rear position are, over their extent to the sipe base (8), inclined so as to enclose an angle of inclination β with respect to the radial direction R in the section planes perpendicular to the tyre axis, wherein the magnitudes of the angles of inclination differ.

2. Arrangement of pneumatic vehicle tyres on a motor vehicle according to the features of Claim 1,
wherein the magnitudes of the angles of inclination are configured such that β>α.

3. Arrangement of pneumatic vehicle tyres on a vehicle according to the features of Claim 2,
wherein the angle of inclination β is configured such that β≠0 °.

4. Arrangement of pneumatic vehicle tyres on a vehicle according to the features of Claim 2 or 3,
wherein the angle of inclination α is configured such that 0°≤α≤15°, in particular α=0°.

5. Arrangement of pneumatic vehicle tyres on a vehicle according to the features of one or more of Claims 1 to 4,
wherein the sipes (6) in the profile band (4) of the pneumatic vehicle tyre(s) (2) arranged in the front position in the direction of travel of the vehicle (1) during forward travel are, over their extent to the sipe base (8), inclined so as to enclose an angle of inclination α with respect to the radial direction R in the section planes perpendicular to the tyre axis, and the sipes (7) in the profile band (5) of the pneumatic vehicle tyre(s) (3) arranged in the rear position are, over their extent to the sipe base (8), inclined so as to enclose an angle of inclination β with respect to the radial direction R in the section planes perpendicular to the tyre axis, wherein the direction of inclination of one angle of inclination points in the direction of rotation D of the vehicle tyre during forward travel and the direction of inclination of the other angle of inclination points counter to the direction of rotation D of the vehicle tyre during forward travel.

6. Arrangement of pneumatic vehicle tyres on a vehicle according to the features of Claim 5,
wherein the direction of inclination of the angle of inclination β of the pneumatic vehicle tyre(s) (3) arranged in the rear position - in particular on a driveable vehicle wheel - points in the direction of rotation D of the vehicle tyre during forward travel, and the direction of inclination of the angle of inclination α of the pneumatic vehicle tyre(s) arranged in the front position - in particular on a non-driveable vehicle wheel - points counter to the direction of rotation D of the pneumatic vehicle tyre (2) during forward travel.

7. Arrangement of pneumatic vehicle tyres on a vehicle according to the features of Claim 5,
wherein the direction of inclination of the angle of inclination α of the pneumatic vehicle tyre(s) (2) arranged in the front position - in particular on a driveable vehicle wheel - points in the direction of rotation D of the vehicle tyre during forward travel, and the direction of inclination of the angle of inclination β of the pneumatic vehicle tyre(s) (3) arranged in the rear position - in particular on a non-driveable vehicle wheel - points counter to the direction of rotation D of the pneumatic vehicle tyre during forward travel.

8. Four-wheeled, motor-powered vehicle (1), in particular passenger motor vehicle, having vehicle wheels arranged in a longitudinal direction of the vehicle in two positions arranged one behind the other, on which vehicle wheels there is arranged in each case one pneumatic vehicle tyre (2, 3) with a profiled tread, having an arrangement of pneumatic vehicle tyres according to the features of one of the preceding Claims 1 to 7.

## Revendications

1. Agencement de bandages pneumatiques (2, 3) pour roues de véhicule sur des roues disposées sur un véhicule, en particulier une voiture automobile, dans deux positions disposées l'une derrière l'autre dans le sens de la longueur du véhicule, et sur chacune desquelles est disposé un bandage pneumatique pour roue de véhicule présentant une bande de roulement profilée, chacune des bandes de roulement profilées étant configurée avec des bandes profilées en relief radial qui s'étendent sur la périphérie du bandage pneumatique pour roue de véhicule,
des fines entailles (6, 7) disposées les unes derrière les autres dans la direction périphérique U du bandage pneumatique pour roue de véhicule étant formées dans au moins l'une des bandes profilées (4, 5) de chaque bandage pneumatique pour roue de véhicule à l'intérieur de la largeur T_{A} d'appui au sol du bandage pneumatique (2, 3) pour roue de véhicule, les fines entailles s'étendant dans leur extension principale dans la surface (9) qui délimite radialement vers l'extérieur la bande profilée (4, 5) avec leur plus grande composante directionnelle dans la direction axiale A du bandage pneumatique pour roue de véhicule et qui s'étend dans la direction radiale R depuis la surface radialement extérieure (9) jusqu'au fond (8) de la fine entaille qui délimite radialement vers l'intérieur la fine entaille (6, 7),
**caractérisé en ce que**
dans la bande profilée (4) du ou des bandages pneumatiques (2) pour roue de véhicule disposés en avant lorsque le véhicule (1) se déplace vers l'avant, les fines entailles (6) sont inclinées par rapport à la direction radiale R sur leur extension vers le fond (8) de la fine entaille autrement que les fines entailles (7) disposées dans la bande profilée (5) du ou des bandes pneumatiques (3) pour roue de véhicule disposées en position arrière et
**en ce que** dans la bande profilée (4) du ou des bandages pneumatiques (2) pour roue de véhicule disposés en position avant lorsque le véhicule se déplace vers l'avant, les fines entailles (6) sont inclinées sous un angle d'inclinaison α par rapport à la direction radiale R sur leur extension allant jusqu'au fond (8) de la fine entaille dans le plan de coupe perpendiculaire à l'axe du bandage de roue et, dans la bande profilée (5) du ou des bandages pneumatiques (3) pour roue de véhicule disposés en position arrière, les fines entailles (7) sont inclinées sous un angle d'inclinaison β par rapport à la direction radiale R dans leur extension vers le fond (8) de la fine entaille dans le plan de coupe perpendiculaire à l'axe du bandage de roue, les angles d'inclinaison ayant des valeurs différentes.

2. Agencement de bandages pneumatiques pour roues de véhicule sur un véhicule, selon les caractéristiques de la revendication 1, dans lequel les angles d'inclinaison sont dimensionnés de telle sorte que β>α.

3. Agencement de bandages pneumatiques pour roues de véhicule sur un véhicule, selon les caractéristiques de la revendication 2, dans lequel l'angle d'inclinaison β est β≠0°.

4. Agencement de bandages pneumatiques pour roues de véhicule sur un véhicule, selon les caractéristiques des revendications 2 ou 3, dans lequel l'angle d'inclinaison α vérifie la relation 0°≤α≤15° et en particulier α=0°.

5. Agencement de bandages pneumatiques pour roues de véhicule sur un véhicule, selon les caractéristiques d'une ou de plusieurs des revendications 1 à 4, dans lequel dans la bande profilée (4) du ou des bandages pneumatiques (2) pour roue de véhicule disposés en position avant lorsque le véhicule (1) se déplace vers l'avant, les fines entailles (6) sont inclinées sous un angle d'inclinaison α par rapport à la direction radiale R sur leur extension allant jusqu'au fond (8) de la fine entaille dans le plan de coupe perpendiculaire à l'axe du bandage de roue et, dans la bande profilée (5) du ou des bandages pneumatiques (3) pour roue de véhicule disposés en position arrière, les fines entailles (7) sont inclinées sous un angle d'inclinaison β par rapport à la direction radiale R dans leur extension vers le fond (8) de la fine entaille dans le plan de coupe perpendiculaire à l'axe du bandage de roue, la direction d'inclinaison de l'un des angles d'inclinaison étant le sens de rotation D du bandage pour roue de véhicule se déplaçant vers l'avant et la direction d'inclinaison de l'autre angle d'inclinaison étant opposée au sens de rotation D du bandage pour roue de véhicule se déplaçant vers l'avant.

6. Agencement de bandages pneumatiques pour roues de véhicule sur un véhicule, selon les caractéristiques de la revendication 5, dans lequel le sens d'inclinaison de l'angle d'inclinaison β du ou des bandages pneumatiques (3) pour roue de véhicule disposés en position arrière, en particulier sur une roue motrice du véhicule, est le sens de rotation D du bandage pour roue de véhicule se déplaçant vers l'avant et la direction d'inclinaison de l'angle d'inclinaison α du ou des bandages pneumatiques pour roue de véhicule disposés en position avant, en particulier sur une roue non motrice du véhicule, est opposé au sens de rotation D du bandage (2) pour roue de véhicule se déplaçant vers l'avant.

7. Agencement de bandages pneumatiques pour roues de véhicule sur un véhicule, selon les caractéristiques de la revendication 5, dans lequel le sens d'inclinaison de l'angle d'inclinaison α du ou des bandages pneumatiques (2) pour roue de véhicule disposés en position avant, en particulier sur une roue motrice du véhicule, est le sens de rotation D du bandage pour roue de véhicule se déplaçant vers l'avant et la direction d'inclinaison de l'angle d'inclinaison β du ou des bandages pneumatiques pour roue de véhicule (3) disposés en position arrière, en particulier sur une roue non motrice du véhicule, est opposé au sens de rotation D du bandage pour roue de véhicule se déplaçant vers l'avant.

8. Véhicule (1) automobile à quatre roues, en particulier voiture automobile, présentant des roues disposées en deux positions situées l'une derrière l'autre dans le sens de la longueur du véhicule et sur chacune desquelles est disposés un bandage pneumatique (2, 3) pour roue de véhicule présentant une bande de roulement profilée, et présentant un agencement de bandage pneumatique pour roue de véhicule selon les caractéristiques d'une des revendications 1 à 7 qui précèdent.
